# EUROPÄISCHE PATENTANMELDUNG

(11) **EP 3 875 000 A1**
(43) Veröffentlichungstag der Anmeldung: **08.09.2021**
(21) Anmeldenummer: 21159602.8
(22) Anmeldetag: 26.02.2021
(51) Int. Cl.: A47J 31/40, A47J 31/44, A47J 31/52

(54) **VORRICHTUNG ZUR HERSTELLUNG VON HEISSGETRÄNKEN**

(30) Priorität: 02.03.2020 DE 102020105465
(71) Anmelder: König, Alexander, 76227 Karlsruhe (DE)
(72) Erfinder: König, Alexander, 76227 Karlsruhe (DE); Stehle, Martin, 76139 Karlsruhe (DE); Fischer, Stefan, 76137 Karlsruhe (DE)
(74) Vertreter: Geitz Truckenmüller Lucht Christ

(57) **Zusammenfassung**

Die Erfindung betrifft eine Vorrichtung (1) zur Herstellung von flüssigen Lebensmittel, insbesondere von Heißgetränken, bevorzugt von Kaffee, welche sich dadurch auszeichnet, dass zwei voneinander getrennte Flüssigkeiten, ein Trägermaterial (3), bevorzugt ein speziell demineralisiertes Wasser, und ein Konzentrat (4), insbesondere ein Kaffeekonzentrat, derart zueinander zuführbar sind, wobei lediglich das Trägermaterial (3) derart erhitzbar ist, dass bei Mischung des erhitzbaren Trägermaterials (3) mit dem Konzentrat (4) bei der Ausgabe eines flüssigen Lebensmittel eine Ausgabetemperatur zwischen 50 bis 90°C einstellbar ist.

## Beschreibung

Die Erfindung betrifft eine Vorrichtung zur Herstellung von flüssigen Lebensmitteln, insbesondere von Heißgetränken, bevorzugt von Kaffee, wobei zwei voneinander getrennte Flüssigkeiten, ein Trägermaterial, bevorzugt speziell demineralisiertes Wasser, und ein Konzentrat, insbesondere ein Kaffeekonzentrat, derart zueinander zuführbar sind, wobei lediglich das Trägermaterial derart erhitzbar ist, dass bei Mischung des erhitzbaren Trägermaterials mit dem Konzentrat bei der Ausgabe eines flüssigen Lebensmittel eine Ausgabetemperatur zwischen 50 bis 90°C einstellbar ist.

Aus der DE 10 2013 008 732 A1 sowie aus der US 4 470 999 A ist eine solche Vorrichtung vorbekannt.

Ferner ist aus dem Stand der Technik das deutsche Patent DE 10 2009 048 233 A1 vorbekannt, welches eine Vorrichtung zur Zubereitung von flüssigen Lebensmitteln, insbesondere zur Zubereitung von Heißgetränken, offenbart. Die Vorrichtung verfügt über eine Heizeinrichtung, mit der in einer Flüssigkeits-Speichereinrichtung gespeicherte Flüssigkeit, insbesondere Wasser, auf eine vorgegebene Temperatur aufheizbar ist. Dieses aufheizbare Wasser wird mittels einer Fördereinrichtung zu einer eine vorgegebenen Menge aufzubrühender und/oder extrahierenden Stoffcharge aufweisenden Brüh- und/oder Extraktionseinheit befördert. Gekennzeichnet ist die Vorrichtung dadurch, dass die Flüssigkeits-Speichereinrichtung durch wenigstens eine Flüssigkeits-Portionskapsel gebildet ist, wobei die vorrichtungsseitige Kapselaufnahme die Kapsel derart aufnimmt, dass die Kapsel mit der Fördereinrichtung strömungsverbunden ist.

Die Aufgabe dieser Vorrichtung liegt darin, eine einfache und kompakte Bauweise bereitzustellen, wodurch auf engsten Bauraum die Vorrichtung zuverlässig und funktionssicher verbaubar ist. Hierfür nutzt die Vorrichtung eine Flüssigkeits-Portionskapsel, wodurch ein portionsweiser Bedarf an Heißgetränken herstellbar ist. Allerdings ist davon auszugehen, dass nach Verwendung der eingesetzten Kapsel diese nicht wieder verwertbar ist, wodurch für jedes herzustellende Heißgetränk eine Kapsel benötigt wird, was einen nicht unerheblichen Materialverschleiß zur Bereitstellung eines Heißgetränkes mittels der o.g. Vorrichtung nach sich zieht.

Ausgehend von dieser Problematik, liegt der Erfindung die Aufgabe zugrunde, ebenfalls eine Vorrichtung mit kompakter Bauweise bereitzustellen, mit welcher auch unter engsten Bauraum zuverlässig und funktionssicher Heißgetränke bedarfsgerecht und ohne Verwendung von Einwegartikeln herstellbar sind.

Diese Aufgabe wird durch eine Vorrichtung gemäß dem geltenden Anspruch 1 gelöst. Die geltenden Ansprüche 2 bis 11 betreffen vorteilhafte Ausgestaltungen dieser Erfindung. Weitere Ausführungsformen können der Beschreibung entnommen werden.

Gemäß dem geltenden Anspruch 1, ist die Vorrichtung zur Herstellung von flüssigen Lebensmitteln, insbesondere von Heißgetränken, bevorzugt von Kaffee, bestimmt, wobei zwei voneinander getrennte Flüssigkeiten, also hier ein Trägermaterial, welches bevorzugt ein speziell demineralisiertes Wasser ist, sowie ein Konzentrat, insbesondere ein Kaffeekonzentrat, derart zueinander geführt werden, dass ein Heißgetränk erzeugt wird. Das Konzentrat liegt hier bevorzugt als Sirup bzw. als dickflüssiges Konzentrat vor. Das Trägermaterial ist dabei derart erhitzbar, dass bei Mischung des erhitzbaren Trägermaterials mit dem Konzentrat bei der Ausgabe des Gemisches durch die Vorrichtung, eine Ausgabetemperatur des Heißgetränkes zwischen 50 bis 90° mit der Vorrichtung einstellbar ist.

Die erfindungsgemäße Vorrichtung zeichnet sich dadurch aus, dass sowohl das Trägermaterial als auch das Konzentrat in einzeln abgepackten Gebinden vorliegen und diese mittels eines jeweils am Gebinde vorhandenen Anschlusses an die Vorrichtung anschließbar sind.

Dieser Anschluss dient zum schnellen und hygienischen Wechseln der Gebinde innerhalb der Vorrichtung. Bevorzugt weisen die Gebinde eine Portionsgröße von 15 bis 100 mL auf. Somit sind diese Gebinde aus der Vorrichtung leicht, schnell und hygienisch entnehmbar und können bedarfsweise ausgetauscht werden. Darüber hinaus zeichnet sich die erfindungsgemäße Vorrichtung dadurch aus, dass diese über eine Schnittstelle verfügt, insbesondere eine NFC-Schnittstelle, mit welcher die Vorrichtung die Gebinde bzw. Vorratsbehälter erkennen und somit die zur Herstellung des Heißgetränkes passenden Systemparameter automatisch einstellen kann. Damit ist gewährleistet, dass abhängig vom eingesetzten Trägermaterial bzw. Konzentrat immer die optimalen Systemparameter zur Herstellung eines Heißgetränkes einstellbar sind.

Besonders bevorzugt liegt das Mischungsverhältnis des Trägermaterials zu Konzentrat bei wenigstens 60:40, so dass insbesondere bei Kaffee auch eine Crema erzeugbar ist.

In alternativer Ausgestaltung gemäß Anspruch 3 sieht die Erfindung für die Vorrichtung vor, dass sowohl das Trägermaterial als auch das Konzentrat aus Vorratsbehältern, insbesondere aus Bag-in-Box Gebinden, bereitgestellt werden. Somit sind auch größere Volumina des Trägermaterials bzw. des Konzentrats, insbesondere über 100 mL, realisierbar.

In konkreter Ausgestaltung sieht die Erfindung für die Vorrichtung vor, dass sowohl das Trägermaterial als auch das Konzentrat jeweils mittels einer Pumpe beförderbar sind. Konkret bedeutet dies, dass die Pumpe, die zum Fördern des Trägermaterial gedacht ist, das bereits aufgeheizte Trägermaterial fördert.

Besonders bevorzugt wird das Trägermaterial mittels einer Heizstrecke, insbesondere einer Heizschnecke, oder einem erhitzbaren Behälter auf eine, abhängig vom eingesetzten Trägermaterial bzw. Konzentrat, geregelte Temperatur erhitzt, bevorzugt auf eine Temperatur zwischen 80 und 99°C. Dabei ist es denkbar, dass die zum Fördern des erhitzten Trägermaterials angeordnete Pumpe innerhalb, vor oder nach der Heizstrecke angeordnet ist.

In einer alternativen Ausgestaltung, gemäß Anspruch 6, sieht die Erfindung für die Vorrichtung vor, dass das erhitzte Trägermaterial und das Konzentrat in eine Mischeinheit einführbar sind, wobei das Konzentrat durch das durch die Förderung des erhitzbaren Trägermaterials entstehende Vakuum, ähnlich zu einer Wasserstrahlpumpe, in die Mischeinheit förderbar ist. Dies hat den Vorteil, dass zum Fördern des Konzentrats keine separate Pumpe benötigt wird und somit letztlich eine kompaktere Bauweise realisierbar ist.

In einer abermals vorteilhaften Ausgestaltung der Vorrichtung, sieht die Erfindung vor, dass das mittels der Mischeinheit vermischte, erhitzte Trägermaterial mit dem Konzentrat mittels einer Ausgabeeinheit ausgebbar ist. Dies hat den Vorteil, dass bei Ausgabe eines Heißgetränkes, insbesondere eines Kaffeegetränks, mittels der Ausgabeeinheit eine Crema erzeugbar ist.

Besonders bevorzugt enthält die Vorrichtung eine Kontaktheizung, so dass ein Gefäß zur Aufnahme des auszugebenden, flüssigen Lebensmittel, insbesondere eines Heißgetränkes, mittels der Kontaktheizung erhitzbar und ein Abkühlen des auszugebenden, flüssigen Lebensmittel innerhalb des Gefäßes verhinderbar ist.

In einer weiteren vorteilhaften Ausgestaltung, beinhaltet die Vorrichtung eine Steuerungseinheit. Diese ist mit den jeweiligen in der Vorrichtung vorhandenen Einrichtungen, beispielweise einer Pumpe zur Förderung des erhitzbaren Trägermaterials, einer Heizstrecke, sowie einer Kontaktheizung wirkungsverbunden, so dass abhängig vom gewünschten Heißgetränk, der gewünschten Temperatur und der auszugebenden Menge, die Systemparameter zum Erhalt des gewünschten Heißgetränkes mit den gewünschten Parametern die Einheiten entsprechend einstellbar sind.

Gemäß Anspruch 10, sieht die Erfindung für die Vorrichtung vor, dass die Vorrichtung mittels Gleichstrom mit 12 bzw. 24 Volt und/oder Wechselstrom und/oder mittels einer speziell vorhandenen Bordspannung betreibbar ist. Dies ermöglicht insbesondere den Einsatz der Vorrichtung in einem KFZ oder in anderen Systemen mit einem Niederspannungsnetz, sowie den Einsatz in mobilen, akkubetriebenen Systemen.

In besonders bevorzugter Ausgestaltung, sieht die Erfindung für die Vorrichtung vor, dass die Vorrichtung über eine Schnittstelle verfügt, insbesondere eine BUS-Schnittstelle, bevorzugt eine CAN-BUS-Schnittstelle, welche zur Ansteuerung der Vorrichtung sowie zur Kommunikation, insbesondere mit einem Bordcomputersystem, dient. Dies ermöglicht insbesondere die Fernsteuerbarkeit der Vorrichtung sowie das Abrufen des jeweiligen Statusses der Vorrichtung.

Die Erfindung wird nachstehend anhand eines Ausführungsbeispiels näher erläutert. Es zeigen:

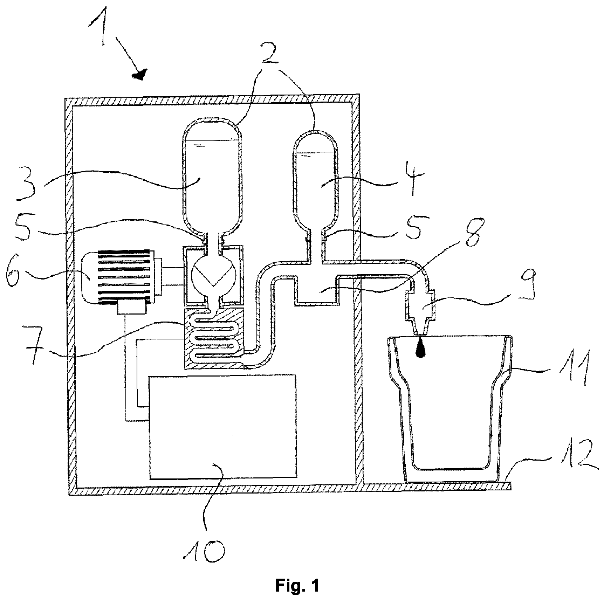

- Fig. 1: eine Seitenansicht eines Querschnittes eines Ausführungsbeispiels.

Figur 1 zeigt den Querschnitt eines Ausführungsbeispiels der Vorrichtung 1. Diese beinhaltet jeweils ein Gebinde 2 für das Trägermaterial 3 als auch für das Konzentrat 4, wobei das Gebinde 2 des Trägermaterials 3 mittels eines Anschlusses 5 an eine elektrisch betriebene Pumpe 6 mit anschließender Heizstrecke 7 angeschlossen ist. Zum anderen ist das Gebinde 2 mit dem Konzentrat 3 ebenfalls über einen Anschluss 5 an eine Mischeinheit 8 angeschlossen. Die elektrische Pumpe 6, sowie die Heizstrecke 7 werden über eine Steuerungseinheit 9 angesteuert, so dass abhängig von der gewünschten Ausgabetemperatur und Menge des gewünschten Heißgetränkes, das Trägermaterial 3 entsprechend förder- und erhitzbar ist.

Das Konzentrat 4 wird, durch das durch die Förderung des Trägermaterials 3 erzeugte Vakuum, analog zu einer Wasserstrahlpumpe, in die Mischeinheit 8 gefördert, in welcher sich das Trägermaterial 3 mit dem Konzentrat 4 mischt. Anschließend wird das so hergestellte Gemisch aus der Mischeinheit 8 über eine Ausgabeeinheit 9 in ein Gefäß ausgegeben. Durch die Ausgabeeinheit 9 ist, insbesondere bei der Ausgabe von Kaffee, eine Crema herstellbar.

Damit das ausgegebene Heißgetränk nach Ausgabe in das Gefäß 11 nicht direkt auskühlt, verfügt die Vorrichtung 1 über eine Kontaktheizung 12, mit welcher das Gefäß 11 erwärmbar ist, so dass ein vorzeitiges Abkühlen des ausgegebenen Heißgetränkes innerhalb des Gefäßes 11 eindämmbar ist.

Somit ist vorstehend eine Vorrichtung offenbart, die eine einfache und kompakte Bauweise bereitstellt und mit welcher ein Heißgetränk aus einem Trägermaterial und einem Getränkekonzentrat herstell- und in ein Gefäß ausgebbar ist.

### BEZUGSZEICHENLISTE

- 1: Vorrichtung
- 2: Gebinde
- 3: Trägermaterial
- 4: Konzentrat
- 5: Anschluss
- 6: Pumpe
- 7: Heizstrecke
- 8: Mischeinheit
- 9: Ausgabeeinheit
- 10: Steuerungseinheit
- 11: Gefäß
- 12: Kontaktheizung

## Patentansprüche

1. Vorrichtung (1) zur Herstellung von flüssigen Lebensmitteln, insbesondere von Heißgetränken, bevorzugt von Kaffee, wobei zwei voneinander getrennte Flüssigkeiten, ein Trägermaterial (3), bevorzugt speziell demineralisiertes Wasser, und ein Konzentrat (4), insbesondere ein Kaffeekonzentrat, derart zueinander zuführbar sind, dass lediglich das Trägermaterial (3) derart erhitzbar ist, dass bei Mischung des erhitzbaren Trägermaterials (3) mit dem Konzentrat (4) bei der Ausgabe eines flüssigen Lebensmittel eine Ausgabetemperatur zwischen 50 bis 90°C einstellbar ist,
**dadurch gekennzeichnet, dass**
sowohl das Trägermaterial (3) als auch das Konzentrat (4) in einzeln abgepackten Gebinden (2) vorliegen, welche mittels eines am Gebinde (2) vorhandenen Anschlusses (5) an die Vorrichtung (1) anschließbar sind, wobei die Gebinde (2) eine Portionsgröße von bevorzugt 15 bis 100 mL aufweisen und die Vorrichtung (1) über eine Schnittstelle verfügt, insbesondere eine NFC-Schnittstelle, mittels derer die Gebinde (2) bzw. die Vorratsbehälter erkennbar sind.

2. Vorrichtung (1) nach Anspruch 1, **dadurch gekennzeichnet, dass** das Mischungsverhältnis von Trägermaterial (3) zu Konzentrat (4) wenigstens bei 60:40 liegt.

3. Vorrichtung (1) nach Anspruch 1 bis 2, **dadurch gekennzeichnet, dass** sowohl das Trägermaterial (3) als auch das Konzentrat (4) aus Vorratsbehältern, insbesondere aus Bag-in-Box-Gebinden, bereitgestellt sind.

4. Vorrichtung (1) nach einem oder mehreren der vorangegangenen Ansprüchen, **dadurch gekennzeichnet, dass** sowohl das Trägermaterial (3) als auch das Konzentrat (4) jeweils mittels einer Pumpe (6) beförderbar sind.

5. Vorrichtung (1) nach einem oder mehreren der vorangegangenen Ansprüchen, **dadurch gekennzeichnet, dass** das Trägermaterial (3) mittels einer Heizstrecke (7), insbesondere einer Heizschnecke, oder einem erhitzbaren Behälter auf eine geregelte Temperatur erhitzbar ist, bevorzugt auf eine Temperatur zwischen 80 und 99°C.

6. Vorrichtung (1) nach Anspruch 5 und/oder einem oder mehreren der vorangegangenen Ansprüchen, **dadurch gekennzeichnet, dass** das erhitzte Trägermaterial (3) und das Konzentrat (4) in eine Mischeinheit (8) einführbar sind, wobei mittels der Mischeinheit (8) das Konzentrat (4), bevorzugt, analog zu einer Wasserstrahlpumpe, in die Mischeinheit (8) förderbar ist.

7. Vorrichtung (1) nach Anspruch 6, **dadurch gekennzeichnet, dass** die Vorrichtung eine Ausgabeeinheit (9) beinhaltet, so dass insbesondere das mittels der Mischeinheit (8) vermischte, erhitzte Trägermaterial (3) mit dem Konzentrat (4) als Gemisch mittels einer Ausgabeeinheit (9) ausgebbar ist.

8. Vorrichtung nach einem oder mehreren der vorangegangenen Ansprüchen, **dadurch gekennzeichnet, dass** die Vorrichtung (1) eine Kontaktheizung (12) aufweist, so dass ein Gefäß (11) zur Aufnahme des auszugebenden flüssigen Lebensmittel mittels der Kontaktheizung (12) erhitzbar und ein Abkühlen des auszugebenden, flüssigen Lebensmittel verhinderbar ist.

9. Vorrichtung (1) nach einem oder mehreren der vorangegangenen Ansprüche, **dadurch gekennzeichnet, dass** die Vorrichtung (1) über eine Steuerungseinheit (10) verfügt.

10. Vorrichtung (1) nach einem oder mehreren der vorangegangenen Ansprüchen, **dadurch gekennzeichnet, dass** die Vorrichtung (1) mittels 12V DC und/oder mittels 24V DC und/oder mittels Wechselstrom und/oder mittels einer speziell vorhandenen Bordspannung betreibbar ist.

11. Vorrichtung (1) nach einem oder mehreren der vorangegangen Ansprüchen, **dadurch gekennzeichnet, dass** die Vorrichtung (1) über eine Schnittstelle, insbesondere eine BUS-Schnittstelle, bevorzugt eine CAN-BUS-Schnittstelle verfügt, welche zur Ansteuerung der Vorrichtung (1) sowie zur Kommunikation, insbesondere mit einem Bordcomputersystem, dient.
